# EUROPÄISCHE PATENTANMELDUNG

(11) **EP 2 747 047 A1**
(43) Veröffentlichungstag der Anmeldung: **25.06.2014**
(21) Anmeldenummer: 13306697.7
(22) Anmeldetag: 11.12.2013
(51) Int. Cl.: G08B 29/18, G08B 5/22, G08B 17/00, G02F 1/139, G09F 9/35

(54) **Rauchmelder mit Anzeige des Batterieladezustands**

(30) Priorität: 19.12.2012 DE 102012223822
(71) Anmelder: Schneider Electric Industries SAS, 92500 Rueil-Malmaison (FR)
(72) Erfinder: Kuhnert, Jürgen, 51702 Bergneustadt (DE)
(74) Vertreter: Manitz, Finsterwald & Partner GbR

(57) **Zusammenfassung**

Herkömmliche Anzeigeelemente zum Anzeigen eines Batteriespannungszustands batteriebetriebener Rauchmelder werden leicht übersehen oder überhört. Erfindungsgemäß umfasst das Anzeigeelement mindestens zwei sich ohne eine Spannungsversorgung aufrechterhaltende Anzeigezustände, so dass die Batterie von der Anzeige nicht weiter belastet wird und außerdem auch bei leerer Batterie die Anzeige wahrnehmbar bleibt.

## Beschreibung

Die Erfindung betrifft einen batteriebetriebenen Rauchmelder umfassend eine Überwachungseinrichtung zur Überwachung einer Batteriespannung und ein Anzeigeelement zum Anzeigen eines Batteriespannungszustands.

Rauchmelder mit einem Anzeigeelement zum Anzeigen eines Batteriespannungszustands sind grundsätzlich bekannt, wobei die Anzeige dazu dient, eine nicht ausreichende Batteriespannung zu signalisieren. Eine über einen längeren Zeitraum erfolgende akustische Anzeige einer Unterspannung kann als störend empfunden werden. Wenn ferner das Signalisieren ausschließlich in Abwesenheit des Benutzers erfolgt, ist eine Wahrnehmung nicht möglich. Weiterhin belasten derartige akustische Anzeigen wie auch optische Anzeigeelemente die Batterie des Rauchmelders bis hin zu einem Ausfall der Anzeige, so dass die Batterieunterspannung nicht mehr signalisiert werden kann. Bei optischen Anzeigen, wie beispielsweise blinkenden LEDs, kommt hinzu, dass die Batterie des Rauchmelders auch während des Betriebs zusätzlich belastet wird.

Der Erfindung liegt die Aufgabe zugrunde, einen batteriebetriebenen Rauchmelder zu schaffen, der bei erhöhter Sicherheit gegen Unterspannung einen reduzierten Energieverbrauch aufweist.

Zur Lösung der Aufgabe ist ein Rauchmelder mit den Merkmalen des Anspruchs 1 vorgesehen.

Der erfindungsgemäße batteriebetriebene Rauchmelder weist eine Überwachungseinrichtung zur Überwachung einer Batteriespannung und ein Anzeigeelement zum Anzeigen eines Batteriespannungszustands auf, wobei das Anzeigeelement mindestens zwei sich ohne eine Spannungsversorgung aufrechterhaltende Anzeigezustände besitzt. Da das Anzeigen der Anzeigezustände keine Spannungsversorgung benötigt, kann ein ausreichender oder nicht ausreichender Batteriespannungszustand dauerhaft angezeigt werden ohne die Batterie des Rauchmelders zu belasten. Durch die Erfindung ist es möglich, die Anzeige umzuschalten, um den Benutzer des Rauchmelders über eine zu niedrige Batteriespannung zu informieren, auch wenn unmittelbar danach die Batteriespannung für die Spannungsversorgung des Rauchmelders und auch für eine dauerhafte Anzeige nicht mehr ausreicht. Somit ist beim Betrachten des Anzeigeelements des Rauchmelders für den Benutzer eindeutig und auch nach längerer Abwesenheit immer erkennbar, ob die Batterie des Rauchmelders ausgetauscht werden muss.

Vorteilhafte Ausbildungen der Erfindung sind den Unteransprüchen, der Beschreibung und der Zeichnung zu entnehmen.

Gemäß einer vorteilhaften Ausführungsform umfasst das Anzeigeelement eine bistabile Flüssigkristallanzeige, z.B. eine cholesterische Flüssigkristallanzeige oder eine ferroelektrische Flüssigkristallanzeige. Die bistabile Flüssigkristallanzeige verbraucht Strom lediglich zum Wechseln des Anzeigezustands. Hierdurch kann die bistabile Flüssigkristallanzeige unmittelbar vor der vollständigen Entladung der Batterie den Anzeigezustand umschalten und danach trotz entladener Batterie den Anzeigezustand beliebig lang beibehalten. Bistabile Flüssigkristallanzeigen weisen ferner eine hohe Auflösung auf, wodurch ein detailliertes Anzeigeelement bei geringem Stromverbrauch realisiert werden kann.

Ein baulich besonders einfaches und kostengünstiges Anzeigeelement kann realisiert werden, wenn das Anzeigeelement eine elektromagnetisch-mechanische Einrichtung umfasst. Dabei erfolgt das Umschalten zwischen den Anzeigezuständen über die elektromagnetisch-mechanische Einrichtung, wie z.B. eine Kipp- oder Dreheinrichtung. Solche Einrichtungen zeichnen sich dadurch aus, dass sie besonders zuverlässig sind, was bei einem Rauchmelder besonders wichtig ist.

Vorzugsweise umfasst die elektromagnetisch-mechanische Einrichtung ein Flip-Dot-Bauteil, wodurch eine Vielfalt an Gestaltungsmöglichkeiten der Anzeigezustände ermöglicht wird. Beispielsweise können die verschiedenen Anzeigezustände in unterschiedlichen Farben lackiert, beschichtet oder beschriftet werden.

Alternativ oder zusätzlich können die Anzeigezustände des Anzeigeelements jeweils eine unterschiedliche Lichtdurchlässigkeit aufweisen, was beispielsweise durch den Einsatz eines elektrochromen Glases möglich wird, wodurch gleichzeitig eine angenehme Ästhetik und leicht unterscheidbare Anzeigezustände realisiert werden können.

Bei einer weiteren vorteilhaften Ausführungsform weisen die Anzeigezustände des Anzeigeelements jeweils eine unterschiedliche Reflektivität auf. Ein Unterschied zwischen den Reflektivitäten der Anzeigezustände kann besonders hilfreich sein, wenn der Rauchmelder mit relativ großem Abstand zu dem Benutzer montiert werden muss, z.B. an einer hohen Decke.

Eine weitere Möglichkeit zur Erkennung der Anzeigezustände kann dadurch realisiert werden, dass die Anzeigezustände des Anzeigeelements alternativ oder zusätzlich jeweils eine unterschiedliche Färbung aufweisen. Ein Farbunterschied erweist sich insofern als vorteilhaft, als der Unterschied zwischen den Anzeigenzuständen besonders auffällig gestaltet werden kann. Durch diese Auffälligkeit ist eine leichtere Erkennung einer Änderung bei der Batteriespannung möglich. Beispielsweise in einem Anzeigezustand, bei dem die Batterie nicht ausgetauscht werden muss, kann der Anzeigezustand die Farbe Weiß besitzen. Wenn ein Gehäuse des Rauchmelders ebenfalls weiß ist, ist demgegenüber ein Anzeigezustand in Rot, wenn die Batterie ausgetauscht werden muss, visuell sehr leicht erkennbar.

Gemäß einer weiteren bevorzugten Ausführungsform umfasst der Anzeigezustand ein Symbol, wodurch eine kompakte und leicht erkennbare Darstellung einer Information ermöglicht wird.

Vorzugsweise kann mindestens ein Anzeigezustand des Anzeigeelements zusätzlich oder alternativ ein Schriftzeichen umfassen. Dadurch kann der Anzeigezustand eine kurze Anweisung über eine notwendige Handlung des Benutzers umfassen.

Wenn die Anzeigezustände des Anzeigeelements mittels konstruktiver und destruktiver Interferenz erzeugt sind, kann das Anzeigeelement beispielsweise als ein Interferometric Modulator Display ausgebildet sein, wodurch ein schnelles Umschalten zwischen detaillierten Anzeigezuständen ermöglicht wird.

Darüber hinaus kann das Anzeigeelement zusätzlich eine akustische Meldung anlässlich des Umschaltens zwischen Anzeigezuständen umfassen, die den Benutzer auf das Umschalten kurzfristig aufmerksam macht. Da die akustische Meldung nicht mehr als die alleinige Anzeige funktionieren muss, kann sie kurz gehalten werden um eine störende Wirkung möglichst zu vermeiden.

Der erfindungsgemäße Rauchmelder kann nach einer weiteren vorteilhaften Ausführungsform als Einweggerät ausgestaltet sein. Bei einem solchen Gerät ist kein Batteriewechsel möglich, sondern der komplette Rauchmelder muss ausgetauscht werden. Durch die erfindungsgemäße Anzeigeeinrichtung ist dabei sichergestellt, dass auch bei vollständig entleerter Batterie eine zuverlässige und dauerhafte Anzeige vorhanden ist, die einen erforderlichen Wechsel des Rauchmelders signalisiert.

Nachfolgend werden verschiedene Ausführungsformen der Erfindung rein beispielhaft unter Bezugnahme auf die beigefügte Zeichnung beschrieben. Es zeigen:
- Fig. 1: ein schematisches Diagramm zum Funktionsaufbau eines erfindungsgemäßen Rauchmelders;
- Fig. 2A bis 2E: schematische Darstellungen von unterschiedlichen Ausführungsformen der Anzeigezustände des Anzeigeelements von Fig. 1;
- Fig. 3A und 3B: perspektivische Darstellungen von zwei Ausführungsformen eines Rauchmelders.

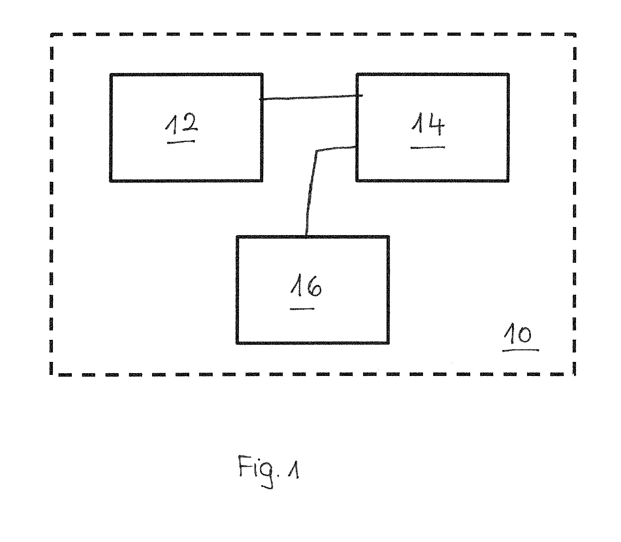

Fig. 1 zeigt rein schematisch einen Rauchmelder 10 zur Erkennung von Rauch, der an eine Raumdecke oder -wand montiert werden kann. Der Rauchmelder 10 umfasst auf bekannte Weise Sensormittel zur Erkennung von Rauch, die hier aus Gründen der Übersichtlichkeit nicht gezeigt sind. Im Betrieb dient eine Batterie 12 zur Spannungsversorgung des Rauchmelders 10. Um den kontinuierlichen Betrieb des Rauchmelders 10 zu gewährleisten, überwacht eine Überwachungseinrichtung 14 eine Batteriespannung der Batterie 12.

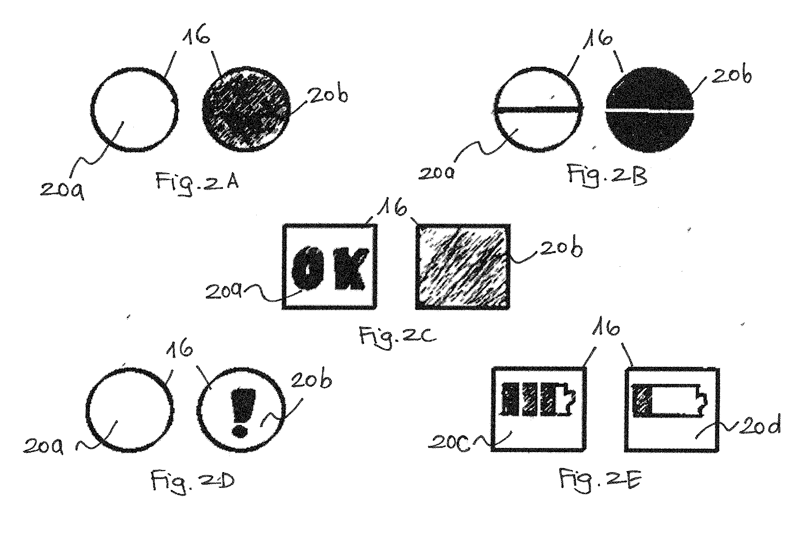

Wenn eine bestimmte Batteriespannung von der Batterie 12 unterschritten wird, steuert die Überwachungseinrichtung 14 ein Anzeigeelement 16 an, welches dem Benutzer des Rauchmelders den Zustand der zu niedrigen Batteriespannung anzeigt. Gemäß der Erfindung umfasst das Anzeigeelement 16 mindestens zwei Anzeigezustände, die eine ausreichende und eine nicht ausreichende Batteriespannung anzeigen. In einer sehr einfachen Ausführungsform der Erfindung wird bei ausreichender Batteriespannung ein erster Anzeigezustand 20a angezeigt (Fig. 2A bis Fig. 2E). Der Anzeigezustand 20a informiert den Benutzer, dass die Batteriespannung der Batterie 12 zum Betrieb des Rauchmelders 10 ausreichend ist.

Nach einer bestimmten Zeit ist die Batterie 12 nahezu entladen. Wie in Fig. 1 gezeigt, stehen die Überwachungseinrichtung 14 und die Batterie 12 in Verbindung miteinander, so dass die Überwachungseinrichtung 14 eine zu niedrige Batteriespannung erkennt. Hieraufhin steuert die Überwachungseinrichtung 14 das Anzeigeelement 16 an, wodurch auf einen zweiten Anzeigezustand 20b des Anzeigeelements 16 umgeschaltet wird. Gegenüber dem ersten Anzeigezustand 20a zeigt der Anzeigezustand 20b, dass die Batterie 12 von dem Benutzer gewechselt werden muss.

Gemäß der Erfindung benötigt das Aufrechterhalten der Anzeigezustände 20a, 20b keine elektrische Energie, d.h. es wird lediglich eine Spannungsversorgung zum Umschalten zwischen den Anzeigezuständen 20a, 20b benötigt. Dadurch lassen sich beide Anzeigezustände 20a, 20b besonders energieeffizient realisieren.

In Fig. 2A bis Fig. 2E sind Ausführungsbeispiele von Anzeigezuständen 20a, 20b, 20c, 20d gemäß der Erfindung gezeigt.

Fig. 2A zeigt ein einfaches Ausführungsbeispiels zweier Anzeigezustände 20a, 20b, wobei in einem ersten Anzeigezustand 20a eine kreisförmige farblose Fläche dargestellt wird. Es versteht sich, dass die Form des Anzeigezustands 20a rein bespielhaft in Fig. 2A dargestellt und beliebig ausgebildet sein kann. Der Anzeigezustand 20a informiert den Benutzer darüber, dass eine ausreichende Batteriespannung vorhanden ist. Wenn die Batterie 12 fast entladen ist, schaltet die Überwachungseinrichtung 14 das Anzeigeelement 16 auf den Anzeigezustand 20b, wodurch angezeigt wird, dass die Batterie 12 gewechselt werden muss. Da das Aufrechterhalten des Anzeigezustands 20b keinen Strom verbraucht, kann er beliebig lang angezeigt werden, bis der Benutzer ihn wahrnimmt und die Batterie 12 wechselt. Dabei versteht es sich, dass die Anzeigezustände 20a, 20b eine umgekehrte Bedeutung haben können, d.h. der Anzeigezustand 20a wird beim notwendigen Batteriewechsel angezeigt und der Anzeigezustand 20b wird bei einer ausreichend geladenen Batterie 12 angezeigt.

Das in Fig. 2A gezeigte Ausführungsbeispiel der Anzeigezustände 20a, 20b lässt sich beispielsweise über eine bistabile Flüssigkristallanzeige realisieren. Dabei werden die Flüssigkristalle des Anzeigeelements 15 für den Anzeigezustand 20a in eine Richtung ausgerichtet. Bei dem Umschalten des Anzeigezustands durch das Anzeigeelement 16 werden die Flüssigkristalle in eine andere Ausrichtung gerichtet, welche Ausrichtung sie ohne Spannungsversorgung bis zum nächsten Umschalten beibehalten. Der Unterschied zwischen den Anzeigezuständen 20a, 20b lässt sich auch durch andere Techniken realisieren, z.B. durch Elektrochromie, ein Interferometric Modulator Display oder durch unterschiedliche Reflektivitäten der Anzeigezustände 20a, 20b.

Die Anzeigezustände 20a, 20b lassen sich auch durch ein Anzeigeelement 16 mit einer elektromagnetisch-mechanischen Einrichtung, z.B. eine Dreh- oder Kippeinrichtung realisieren, wie in Fig. 2B gezeigt ist. Dabei umfasst der erste Anzeigezustand 20a zwei halbkreis-förmige Platten, die durch die Vorrichtung des Anzeigeelements 16 in einer ersten Position ohne Spannungsversorgung gehalten werden. Bei dem Umschalten der Anzeigezustände 20a, 20b, werden die Platten mittels der Vorrichtung in eine zweite Position gekippt. In der zweiten Position wird der Anzeigezustand 20b angezeigt, der zwei halbkreisförmige Platten einer anderen Färbung umfasst.

In Fig. 2C ist ein weiteres Ausführungsbeispiel der Anzeigezustände 20a, 20b gezeigt, in dem ein quadratisches Anzeigeelement 16 in dem ersten Anzeigezustand 20a Schriftzeichen anzeigt, welche das Wort "OK" bilden. Dabei versteht der Benutzer, dass die Batterie 12 "in Ordnung" ist, d.h. die Batterie 12 muss nicht gewechselt werden. Demgegenüber zeigt der zweite Anzeigezustand 20b ein Schwarzes Quadrat an, wodurch der Benutzer über den notwendigen Batteriewechsel informiert wird.

Wie beispielhaft in Fig. 2D dargestellt, kann alternativ mindestens ein Anzeigezustand ein Symbol umfassen. Dabei wird bei dem ersten Anzeigezustand 20a nichts angezeigt, und bei dem zweiten Anzeigezustand 20b ein Symbol zum Batteriewechsel angezeigt.

Fig. 2E zeigt ein Ausführungsbeispiel zweier Anzeigezustände 20c, 20d, mit denen detaillierte Informationen angezeigt werden. Dabei zeigt der erste Anzeigezustand 20c einen ersten Zustand der Batteriespannung und der zweite Anzeigezustand 20d zeigt einen zweiten Zustand der Batteriespannung, bei dem die Batterie 12 im Vergleich zum ersten Anzeigezustand 20c etwas mehr entladen ist. Es versteht sich, dass das Ausführungsbeispiel weitere nicht gezeigte Anzeigezustände umfassen kann. Bei dem in Fig. 2E gezeigten Ausführungsbeispiel eignet sich eine bistabile Flüssigkristallanzeige aufgrund ihrer hohen Auflösung, da die Anzeigezustände 20c, 20d mehr detaillierte Informationen anzeigen als die Anzeigezustände 20a, 20b.

Es versteht sich, dass die in Fig. 2A bis Fig. 2E gezeigten Anzeigezustände 20a, 20b, 20c, 20d auch kombiniert werden können.

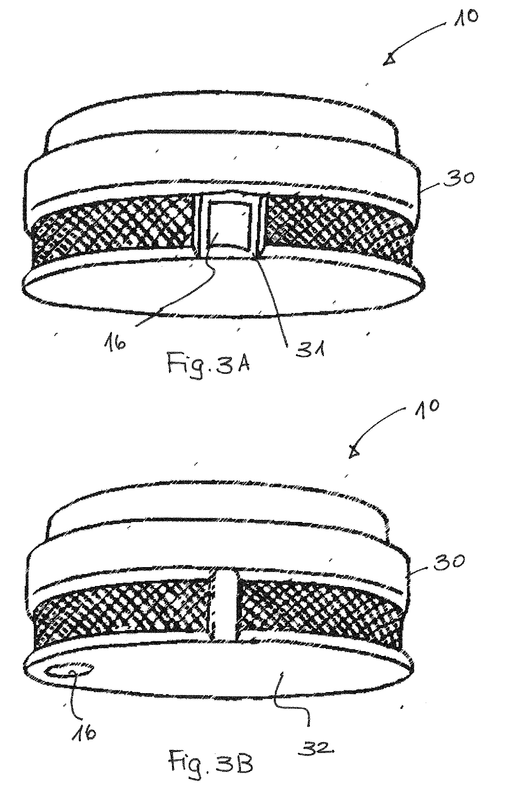

Fig. 3A und Fig. 3B zeigen zwei unterschiedliche Ausführungsformen eines Rauchmelders 10 mit einem Gehäuse 30. Das Anzeigeelement 16 muss dabei an dem Gehäuse 30 des Rauchmelders 10 so angeordnet sein, dass der Benutzer das Anzeigeelement 16 nach der Montage des Rauchmelders 10 sehen kann. Bei dem in Fig. 3A gezeigten Rauchmelder 10 ist das Anzeigeelement 16 an einer seitlichen Gehäusefläche 31 angeordnet. Bei dem in Fig. 3B gezeigten Rauchmelder 10 ist das Anzeigeelement 16 an einer unteren Gehäuseseite 32 angeordnet, wodurch das Anzeigeelement 16 im montierten Zustand besonders gut zu erkennen ist. Es versteht sich, dass das seitlich angeordnete Anzeigeelement 16 kreisförmig ausgebildet sein kann und das auf der unteren Gehäuseseite 32 angeordnete Anzeigeelement 16 quadratisch ausgebildet sein kann.

### Bezugszeichenliste

- 10: Rauchmelder
- 12: Batterie
- 14: Überwachungseinrichtung
- 16: Anzeigeelement
- 20a: erster Anzeigezustand
- 20b: zweiter Anzeigezustand
- 20c: erster Anzeigezustand
- 20d: zweiter Anzeigezustand
- 30: Gehäuse
- 31: seitliche Gehäusefläche
- 32: untere Gehäuseseite

## Patentansprüche

1. Batteriebetriebener Rauchmelder (10) umfassend eine Überwachungseinrichtung (14) zur Überwachung einer Batteriespannung und ein Anzeigeelement (16) zum Anzeigen eines Batteriespannungszustands,
dadurchgekennzeichnet, dass
das Anzeigeelement (16) mindestens zwei sich ohne eine Spannungsversorgung aufrechterhaltende Anzeigezustände (20a, 20b; 20c, 20d) aufweist.

2. Rauchmelder (10) nach Anspruch 1,
**dadurch gekennzeichnet, dass**
das Anzeigeelement (16) eine bistabile Flüssigkristallanzeige umfasst.

3. Rauchmelder (10) nach Anspruch 1,
**dadurch gekennzeichnet, dass**
das Anzeigeelement (16) eine elektromagnetisch-mechanische Einrichtung umfasst.

4. Rauchmelder (10) nach Anspruch 3,
**dadurch gekennzeichnet, dass**
die elektromagnetisch-mechanische Einrichtung ein Flip-Dot-Bauteil umfasst.

5. Rauchmelder (10) nach zumindest einem der vorhergehenden Ansprüche,
**dadurch gekennzeichnet, dass**
die Anzeigezustände (20a, 20b; 20c, 20d) des Anzeigeelements (16) jeweils eine unterschiedliche Lichtdurchlässigkeit aufweisen.

6. Rauchmelder (10) nach zumindest einem der vorhergehenden Ansprüche,
**dadurch gekennzeichnet, dass**
die Anzeigezustände (20a, 20b; 20c, 20d) des Anzeigeelements (16) jeweils eine unterschiedliche Reflektivität aufweisen.

7. Rauchmelder (10) nach zumindest einem der vorhergehenden Ansprüche,
**dadurch gekennzeichnet, dass**
die Anzeigezustände (20a, 20b; 20c, 20d) des Anzeigeelements (16) jeweils eine unterschiedliche Färbung aufweisen.

8. Rauchmelder (10) nach zumindest einem der vorhergehenden Ansprüche,
**dadurch gekennzeichnet, dass**
mindestens eine Anzeigezustand (20a, 20b; 20c, 20d) ein Symbol umfasst.

9. Rauchmelder (10) nach einem der vorhergehenden Ansprüche,
**dadurch gekennzeichnet, dass**
mindestens ein Anzeigezustand (20a, 20b; 20c, 20d) ein Schriftzeichen umfasst.

10. Rauchmelder (10) nach zumindest einem der vorhergehenden Ansprüche,
**dadurch gekennzeichnet, dass**
die Anzeigezustände (20a, 20b; 20c, 20d) mittels konstruktiver und destruktiver Interferenz erzeugt sind.
